(19) Europäisches Patentamt
European Patent Office
Office européen des brevets

(11) EP 1 791 005 A1

(12) EUROPEAN PATENT APPLICATION
published in accordance with Art. 158(3) EPC

(43) Date of publication:
**30.05.2007 Bulletin 2007/22**

(21) Application number: **05783572.0**

(22) Date of filing: **07.09.2005**

(51) Int Cl.:
***G02B 5/30*** *(2006.01)* ***G02F 1/13363*** *(2006.01)*

(86) International application number:
**PCT/JP2005/016866**

(87) International publication number:
**WO 2006/030797 (23.03.2006 Gazette 2006/12)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.09.2004 JP 2004268356**

(71) Applicant: **TEIJIN LIMITED**
**Osaka-shi**
**Osaka 541-0054 (JP)**

(72) Inventors:
- **NITTA, Hideaki,**
  **Tokyo Res. Cent., Teijin Ltd.**
  **Hino-shi, Tokyo 191-0065 (JP)**
- **MATSUDA, Hironori,**
  **Tokyo Res. Cent., Teijin Ltd.**
  **Hino-shi, Tokyo 191-0065 (JP)**
- **MATSUMURA, Shunichi,**
  **Iwakuni Res. Ce., Teijin Ltd.**
  **Yamag0uchi 740-0014 (JP)**

(74) Representative: **HOFFMANN EITLE**
**Patent- und Rechtsanwälte**
**Arabellastrasse 4**
**81925 München (DE)**

# (54) RETARDATION FILM

(57) There is provided a retardation film that has high moisture resistance and good dimensional stability and can be incorporated into, for example, a liquid crystal display, to be effectively used for improvements in the visual quality of liquid crystals such as an improvement in view angle, an improvement in contrast and color compensation. The retardation film comprises an amorphous polyolefin copolymer. The amorphous polyolefin copolymer (a) comprises an ethylene unit and a norbornene unit, (b) the norbornene unit comprises two-chain parts, the tacticities of the two-chain parts are meso and racemo, and the meso two-chain parts/racemo two-chain parts ratio is 4 or more, and (c) the copolymer has a glass transition temperature of 100 to 180°C.

Fig. 1

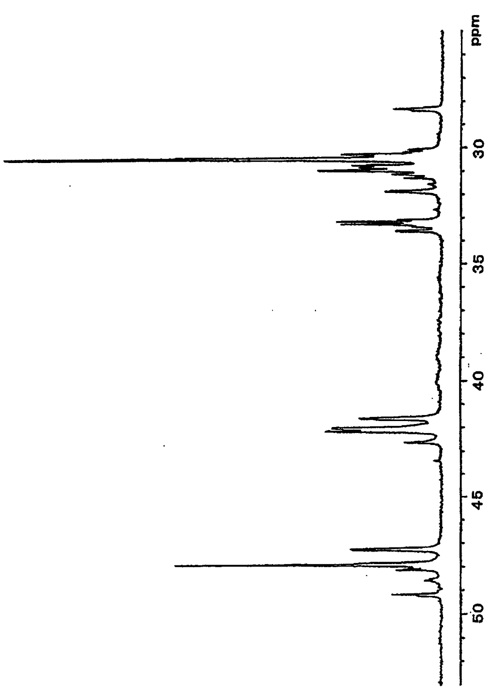


EP 1 791 005 A1

## Description

### Field of the Invention

This invention relates to a retardation film. More specifically, it relates to a retardation film using an amorphous polyolefin copolymer comprising an ethylene unit and a norbornene unit.

### Background Art

Development of liquid crystal displays in recent years has been remarkable. Not only small-sized and medium-sized liquid crystal displays for cellular phones, personal computer monitors and the like but also large-sized liquid crystal displays for televisions have been widely used. In liquid crystal displays, a retardation film having birefringence is generally used in a polymer film for the purpose of improvements in visual quality such as color compensation of liquid crystals, expansion of view angle and an improvement in contrast, and a polycarbonate and the like have been often used as a polymer material. As for the retardation film, a resin called an amorphous polyolefin has been receiving attention lately. The amorphous polyolefin is a polyolefin which has had its heat resistance improved and become amorphous by incorporation of an alicyclic structure. It has high transparency and excellent dimensional stability due to low water absorption. Further, it has an extremely small photoelastic constant since it contains no aromatic component. The excellent physical properties of the amorphous polyolefin have been gradually receiving attention along with an increase in the size of liquid crystal displays for televisions and the like.

The amorphous polyolefin can be roughly classified into two types according to a structural difference. One of them is obtained by subjecting a cyclic olefin to a ring-opening polymerization and then hydrogenating a produced double bond in the main chain, and resins such as ZEONEX (trade name: Trademark Registration) and ZEONOR (trade name: Trademark Registration) of ZEON CORPORATION and ARTON (trade name: Trademark Registration) of JSR Corporation have already been placed on the market. The other is obtained by vinyl-copolymerizing a cyclic olefin and ethylene, and APEL (trade name: Trademark Registration) of Mitsui Chemicals, Inc. and TOPAS (trade name: Trademark Registration) of TICONA GmbH have been commercially available. Of these, as to the former type resulting from ring-opening polymerization and hydrogenation, a number of studies, as a retardation film, on retardation properties, a production method, incorporation into a liquid crystal display and the like, have been conducted (refer to JP-A 4-245202, Japanese Patent No. 3273046, JP-A 6-59121 and 8-43812, Japanese Patent No. 3470567, and JP-A 2003-306557).

Meanwhile, the latter copolymer of a cyclic olefin and ethylene can be produced simply by polymerization and is advantageous over the former from an economical standpoint. However, its properties as a retardation film have been hardly known. Although the vinyl copolymer resins are often described, with a generic term such as "thermoplastic polyolefins" or "cyclic polyolefins" as desirable resins in reports using resins of the type resulting from ring-opening polymerization and hydrogenation, cases where the resins have been studied specifically have been hardly seen. Heretofore, merely a retardation film obtained by stretching a sheet comprising a copolymer of ethylene and tetracyclododecene to give birefringence to the sheet has been reported (refer to Japanese Patent No. 3497894), and more details about what kind of structure is suitable for a retardation film have not been known at all. For example, when an amorphous polyolefin is used as a retardation film, developability of birefringence, i.e. ease of development of birefringence, is an important characteristic, in addition to film formability and transparency. The reason is that the amorphous polyolefin has an essential attribute that it has a very low photoelastic constant as a whole and hardly develops birefringence as compared with aromatic polymers such as polycarbonate and polysulfone. Thus, in the case of the resin which hardly develops birefringence even if the film is stretched, when a retardation film having a desired retardation value is desired to be obtained, the thickness of the film must be made quire large, and the film is not suited as a member for liquid crystal displays which have been desired to be thinner and lighter.

Meanwhile, a number of methods for obtaining a vinyl copolymer of ethylene and a cyclic olefin are known. A method of polymerizing by use of a Ziegler-Natta catalyst typified by a combination of a vanadium compound and an organoaluminum compound and a method of polymerizing by use of a metallocene catalyst comprising a metallocene which is a metal complex of titanium, zirconium or the like and a co-catalyst such as MAO (methyl aluminoxane) are practical. Of these, the Ziegler-Natta catalyst is known to give an atactic polymer having poor tacticity by random copolymerization because its composition and steric structure are difficult to control due to its polymerization mechanism. Meanwhile, the metallocene catalyst has uniform active spots and can be controlled in various ways. For example, it has been confirmed that the tacticity of copolymer to be obtained differs according to a difference in the ligands of metallocene (refer to Macromol. Rapid Commun. 20, 279 (1999)). Further, although it has been reported that the difference influences the mechanical characteristics and melt characteristics of the copolymer (refer to JP-A 8-507800, JP-A 8-507801 and JP-A 7-2953), a difference in optical properties has not been studied.

Disclosure of the Invention

Under the above circumstances, an object of the present invention is to provide a highly appropriate retardation film in an amorphous polyolefin of the latter type which is advantageous from an economical standpoint, i.e. a copolymer of a cyclic olefin and ethylene.
Another object of the present invention is to provide an unoriented film for the above retardation film.
Still another object of the present invention is to provide a liquid crystal display device comprising the above retardation film.
Other objects and advantages of the present invention will become apparent from the following description.
According to the present invention, firstly, the above objects and advantages of the present invention are achieved by a retardation film comprising an amorphous polyolefin copolymer,

(a) the amorphous polyolefin copolymer comprising an ethylene unit and a norbornene unit,
(b) the norbornene unit comprising two-chain parts, the tacticities of the two-chain parts being meso and racemo, and the meso two-chain parts/racemo two-chain parts ratio being 4 or more, and
(c) the amorphous polyolefin copolymer having a glass transition temperature of 100 to 180°C.

According to the present invention, secondly, the above objects and advantages of the present invention are achieved by an unoriented film for producing the retardation film of the present invention.
According to the present invention, thirdly, the above objects and advantages of the present invention are achieved by a liquid crystal display device comprising the retardation film of the present invention.

Brief Description of the Drawings

Fig. 1 is a chart of the $^{13}$C-NMR spectrum of ethylene-norbornene copolymer containing 44 mol% of norbornene component and obtained in Example 1.
Fig. 2 is a chart of the $^{13}$C-NMR spectrum of the grade 6013 of TOPAS (trade name) of TICONA GmbH used in Examples 2 to 5.
Fig. 3 is a chart of the $^{13}$C-NMR spectrum of ethylene-norbornene copolymer containing 42 mol% of norbornene component and obtained in Comparative Example 1.
Fig. 4 is a chart of the $^{13}$C-NMR spectrum of the grade 5013 of TOPAS (trade name) of TICONA GmbH used in Comparative Example 2.

Best Mode for Carrying out the Invention

Hereinafter, the present invention will be described in detail.
An amorphous polyolefin used in the present invention is a copolymer resulting from copolymerization of ethylene and norbornene. An example thereof is a copolymer comprising an ethylene recurring unit (A) and a norbornene recurring unit (B) which are represented by the following formulae:

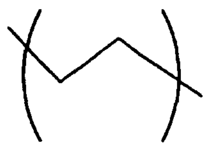

· · · (A)

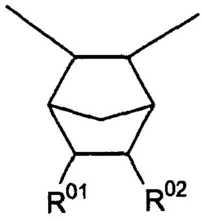

· · · (B)

wherein $R^{01}$ and $R^{02}$ independently represent a hydrogen atom or an alkyl group having 1 to 10 carbon atoms.

Illustrative examples of norbornene compounds which provide the above norbornene recurring unit (B) include bicyclo[2.2.1]hept-2-ene, 6-methylbicyclo[2.2.1]hept-2-ene, 5,6-dimethylbicyclo[2.2.1]hept-2-ene, 6-ethylbicyclo[2.2.1]hept-2-ene, and 6-butylbicyclo[2.2.1]hept-2-ene. Of these, bicyclo[2.2.1]hept-2-ene wherein $R^{01}$ and $R^{02}$ are a hydrogen atom is preferred.

The above amorphous polyolefin may also contain, in addition to the above recurring units (A) and (B), recurring units comprising other copolymerizable vinyl monomers in such small amounts that do not impair the objects of the present invention. Specific examples of the other vinyl monomers include a cyclic olefin represented by the following formula (C):

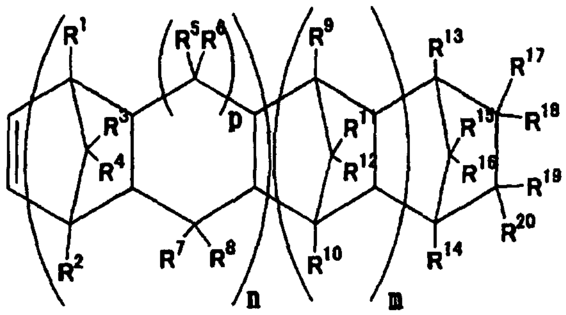

· · · (C)

(wherein n is 0 or 1, m is 0 or a positive integer, p is 0 or 1, $R^1$ to $R^{20}$ are the same or different and represent a hydrogen atom, a halogen atom or a saturated or unsaturated aliphatic hydrocarbon group having 1 to 12 carbon atoms, $R^{17}$ and $R^{18}$ or $R^{19}$ and $R^{20}$ may form an alkylidene group, $R^{17}$ or $R^{18}$ and $R^{19}$ or $R^{20}$ may form a ring, and the ring may have a double bond.), propylene, α-olefins having 3 to 18 carbon atoms such as 1-butene, 1-hexene, 4-methyl-1-pentene, 1-octene, 1-decene, 1-dodecene, 1-tetradecene, 1-hexadecene and 1-octadecene, and cycloolefins such as cyclobutene, cyclopentene, cyclohexene, 3-methyl cyclohexene and cyclooctene. Of these, the α-olefin having 3 to 18 carbon atoms can be used as a molecular weight modifier in copolymerization, and 1-hexene is particularly suitably used. The other vinyl monomers may be used alone or in combination of two or more, and the recurring units comprising them preferably constitute 10 mol% or less, more preferably 5 mol% or less, of all recurring units.

Although depending on a polymerization method, a catalyst to be used, composition and the like, an ethylene-norbornene copolymer generally contains a certain amount of chain parts of norbornene units in any case. As for tacticity in two-chain parts (hereinafter referred to as "NN dyad") of norbornene units of vinyl polymerization type, it is known that there are two types of stereoisomers, i.e. a meso type of the following formula (D) and a racemo type of the following formula (E).

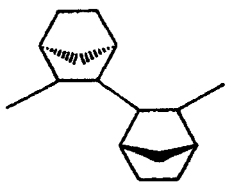

· · · (D)

meso type

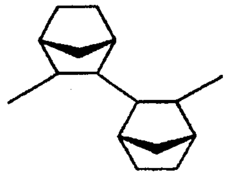

· · · (E)

racemo type

With respect to the tacticity, the ratio of meso two-chain parts represented by the above formula (D) to racemo two-chain parts represented by the above formula (E) in the copolymer of the present invention is 4 or more. The above ratio is preferably 6 or more. The upper limit of the ratio is not particularly limited. The higher the ratio, the more suitable and more preferable it is for developability of birefringence. The above ratio of the NN dyad stereoisomers can be determined by $^{13}$C-NMR based on a report of analyzing the tacticity of ethylene-norbornene copolymer (refer to the above Macromol. Rapid Commun. 20, 279 (1999)). In the present invention, in $^{13}$C-NMR measured by use of a ortho-dichlorobenzene d4 solvent, the ratio of the meso two-chain parts to the racemo two-chain parts is calculated in such a manner that it is equivalent to the ratio of [peak area at 28.3 ppm in $^{13}$C-NMR spectrum] / [peak area at 29.7 ppm in $^{13}$C-NMR spectrum]. As the ratio becomes smaller than 4, i.e. the proportion of the racemo two-chain parts becomes higher, the obtained copolymer has lower developability of birefringence. As a matter of course, although a desired retardation value may be obtained by means such as increasing the thickness, increasing the stretch ratio or stretching at a lower stretch temperature, it is not desirable from the viewpoints of a reduction in thickness, productivity and the like.

Further, in analysis by $^{13}$C-NMR, the fraction (mole fraction) of the NN dyads to all norbornene unit components, i.e. how much of chain architecture the norbornene units constitute can also be determined, and it is about 0.1 to 0.6 in the present invention. The mole fraction is calculated as [peak area at 28.3 ppm in $^{13}$C-NMR spectrum + peak area at 29.7 ppm in $^{13}$C-NMR spectrum] / [peak area of a carbon atom in all norbornene components].

Further, the glass transition temperature (Tg) of the copolymer in the present invention is 100 to 180°C. When Tg is lower than 100°C, heat resistance stability is poor. Meanwhile, when Tg is higher than 180°C, the tenacity of the film is liable to deteriorate, and the melt viscosity of the copolymer becomes so high that melt film production becomes difficult disadvantageously. Tg is preferably 120 to 160°C, more preferably 130 to 150°C.

In the copolymer used in the present invention, there is a correlation between the compositions of the above recurring units (A) and (B) and the glass transition temperature. The molar ratio (A)/(B) is preferably 61/39 to 40/60. A more preferred glass transition temperature of 120 to 160°C falls within a molar ratio (A)/(B) of 57/43 to 46/54. The compositions can be determined by $^{13}$C-NMR measurement.

The molecular weight of the ethylene-norbornene copolymer used in the present invention is preferably 0.1 to 10 dl/g, more preferably 0.3 to 3 dl/g, in terms of reduced viscosity ηsp/c measured at 30°C in a cyclohexane solution having a concentration of 1.2 g/dl. When the reduced viscosity ηsp/c is lower than 0.1, the film becomes brittle disadvantageously, while when it is larger than 10, melt viscosity becomes so high that melt film production becomes difficult.

In the present invention, a copolymer may be used as it is, or two or more copolymers differing in composition or molecular weight may be used as a blend. In the case of the blend, the above preferred composition and molecular weight refer to those of the whole blend. When the blend is used, copolymers having similar copolymerization compositions are preferably used from the viewpoint of compatibility. When copolymers having very different compositions are used, phase separation may occur by blending, and the film may be whitened at the time of film production or orientation by stretching.

A method for producing the ethylene-norbornene copolymer used in the present invention is not particularly limited as long as the glass transition temperature and the tacticity of the NN dyad satisfy the above ranges. More specifically, a method of copolymerizing ethylene and norbornene by use of a metallocene catalyst is preferred. The metallocene used in that case is represented by the following formula (F):

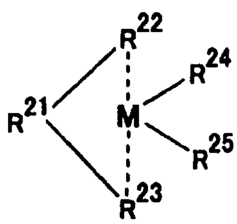

· · · (F)

wherein M is a metal selected from the group consisting of titanium, zirconium and hafnium, $R^{24}$ and $R^{25}$ are the same or different and represent a hydrogen atom, a halogen atom, a saturated or unsaturated hydrocarbon group having 1 to 12 carbon atoms, an alkoxy group having 1 to 12 carbon atoms or an aryloxy group having 6 to 12 carbon atoms, $R^{22}$ and $R^{23}$ are the same or different and represent a monocyclic or polycyclic hydrocarbon group which can form a sandwich structure in combination with the central metal M, $R^{21}$ is a bridge which connects the $R^{22}$ group with the $R^{23}$ group and is selected from the following formulae:

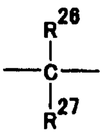 , 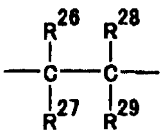 , 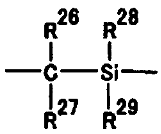 , 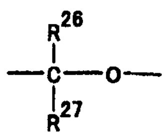 ,

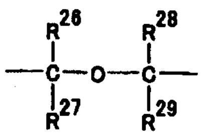 , 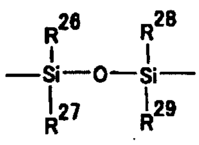 ,

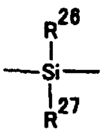 , 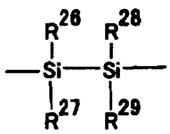 , 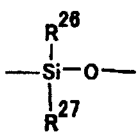 , —O— ,

—S— , 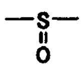 , —$SO_2$— , 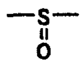 ,

wherein $R^{26}$ to $R^{29}$ are the same or different and represent a hydrogen atom, a halogen atom, a saturated or unsaturated hydrocarbon group having 1 to 12 carbon atoms, an alkoxy group having 1 to 12 carbon atoms or an aryloxy group having 6 to 12 carbon atoms, or $R^{26}$ and $R^{27}$ or $R^{28}$ and $R^{29}$ may form a ring.

When the ligands $R^{22}$ and $R^{23}$ are the same, they preferably have $C_2$ symmetry to the central metal M, and when the ligands $R^{22}$ and $R^{23}$ are different, they preferably have $C_1$ symmetry to the central metal M. $R^{22}$ and $R^{23}$ are preferably a cyclopentadienyl group, an indenyl group, or an alkyl- or aryl-substituted form thereof, and the central metal M is the most preferably zirconium from the viewpoint of catalytic activity. $R^{24}$ and $R^{25}$ may be the same or different and are preferably an alkyl group having 1 to 6 carbon atoms or a halogen atom, especially a chlorine atom. $R^{26}$ to $R^{29}$ are preferably a hydrogen atom or an alkyl or phenyl group having 1 to 6 carbon atoms. Preferred examples of $R^{21}$ include lower alkylene groups such as methylene, ethylene and propylene groups, alkylidene groups such as isopropylidene, substituted alkylene groups such as diphenylmethylene, a silylene group, and substituted silylene groups such as dimethyl silylene and diphenyl silylene.

Specific examples of preferred metallocenes include isopropylidene-(cyclopentadienyl)(1-indenyl) zirconium dichloride, isopropylidene-[(3-methyl)cyclopentadienyl] (1-indenyl)zirconium dichloride, dimethyl silylene-(cyclopentadienyl)(1-indenyl)zirconium dichloride, dimethyl silylene-bis(1-indenyl)zirconium dichloride, diphenyl silylene-bis(1-indenyl)zirconium dichloride, ethylene-bis(1-indenyl)zirconium dichloride, and isopropylidene-bis(1-indenyl)zirconium dichloride. These may be used alone or in combination of two or more. Further, as a co-catalyst for the metallocene, a known co-catalyst such as methyl aluminoxane which is an organoaluminum oxy compound or a combination of an ionic boron compound and an alkyl aluminum compound can be used.

By use of the metallocene catalyst, the target copolymer can be polymerized by a known polymerization method using a hydrocarbon solvent such as toluene, xylene or cyclohexane. The obtained copolymer can be isolated by separating the copolymer from the solution by reprecipitating the copolymer in a poor solvent such as alcohol and

washing it, or adsorbing the catalyst to an adsorbent, or adding a certain additive to aggregate and precipitate it and then removing the solvent by distillation.

The retardation film of the present invention can be produced by obtaining a generally unstretched or unoriented film for producing a film from the copolymer and stretching the film and then stretching the film.

The above unstretched film can be produced by a known method such as solution casting, melt extrusion, hot pressing or calendering. Of these, the melt extrusion which involves no solvent is preferred in view of productivity, economic efficiency and environment friendliness. As the melt extrusion, a method comprising extruding the resin by use of a T die and sending the extruded resin to a cooling roll is preferably used. Although the temperature at the time of extrusion is determined in consideration of the flowability, heat stability and the like of the copolymer, the copolymer of the present invention is preferably extruded at 220 to 300°C. When the temperature is lower than 220°C, the melt viscosity of the copolymer becomes too high, while when the temperature is higher than 300°C, the transparency and uniformity of the film may be impaired by degradation and gelation of the copolymer. The temperature is more preferably 220 to 280°C.

Meanwhile, when the film is produced from the above copolymer by solution casting, a hydrocarbon solvent such as toluene, xylene, cyclohexane or decalin is suitably used.

In production of the unstretched film by these methods, nonuniformity in film thickness is preferably made as little as possible. This is because if the nonuniformity in film thickness is great at this point, nonuniformity in the retardation of the retardation film obtained in the subsequent stretching step may also become great. The nonuniformity in film thickness is preferably within ±8%, more preferably within ±5% of the film thickness. Although the thickness of the unstretched film is determined in consideration of a desired retardation value and film thickness of the retardation film resulting from stretching, it is preferably 30 to 400 μm, more preferably 40 to 300 μm, particularly preferably 40 to 250 μm.

The retardation film of the present invention can be obtained by stretching and orienting the thus obtained unstretched film. A stretching method is not particularly limited, and a monoaxially or biaxially oriented film can be obtained by a known method such as longitudinal monoaxial stretching that stretches the film between rolls, transverse monoaxial stretching using a tenter, or a combination of these methods, i.e. simultaneous biaxial stretching or sequential biaxial stretching. Further, although the film is preferably stretched continuously in view of productivity, it may be conducted in batch form without particular restrictions. The stretch temperature is (Tg - 20°C) to (Tg + 30°C), preferably (Tg - 10°C) to (Tg + 20°C) wherein Tg is the glass transition temperature of the ethylene-norbornene copolymer. Although the stretch ratios are determined according to a target retardation value, they are preferably 1.05 to 4 times, more preferably 1.1 to 3 times, in longitudinal and transverse directions.

Meanwhile, there are various types of liquid crystal displays such as TN, STN, TFT, transmissive, reflective and semi-transmissive liquid crystal displays. Further, various modes such as TN, vertical alignment (VA), OCB and IPS modes have been developed. Properties required for a retardation film vary according to liquid crystals used and the mode type. The ethylene-norbornene copolymer of the present invention can provide a retardation film having a small thickness and various properties because the copolymer shows good developability of birefringence.

A preferred retardation film obtained in the present invention is a retardation film whose retardation R (550) in a film plane at a wavelength of 550 nm is within a range represented by the following expression (1) :

$$100\ nm < R\ (550) < 800\ nm \ldots (1)$$

and thickness is 10 to 150 μm. The retardation R is a property representing a delay in the phase of light passing through the film in a vertical direction and defined by the following expression (5):

$$R = (nx - ny) \times d \ldots (5)$$

wherein nx is the refractive index of the slow axis (axis with the highest refractive index) in the film plane, ny is a refractive index in a direction perpendicular to nx in the film plane, and d is the thickness of the film.

R (550) is more preferably 100 to 600 nm, much more preferably 120 to 600 nm. Further, the thickness is more preferably 20 to 120 μm, much more preferably 20 to 80 μm. The retardation film can be prepared by monoaxial or biaxial stretching and can be suitably used for a 1/4λ plate, a 1/2λ, plate, a λ plate and the like.

Another preferred retardation film is a retardation film whose retardation R (550) in a film plane and a retardation K (550) in a film thickness direction at a wavelength of 550 nm are within ranges represented by the following expressions (2) and (3):

$$0 \text{ nm} < R\ (550) < 100 \text{ nm} \ldots (2)$$

$$50 \text{ nm} < K\ (550) < 400 \text{ nm} \ldots (3)$$

and thickness is 10 to 150 μm.

In the above expression, K (550) is a retardation value in the film thickness direction at a wavelength of 550 nm and defined by the following expression (4):

$$K = \{(nx + ny)/2 - nz\} \times d \ldots (4)$$

In the above expression, nx and ny are the refractive indices of the x and y axes in the film plane, nz is a refractive index in the thickness direction perpendicular to the x and y axes, and d is the thickness of the film.

The definition of the retardation R is the same as described above. R (550) is more preferably 10 to 80 nm, much more preferably 30 to 80 nm. K (550) is more preferably 80 to 250 nm. The thickness is more preferably 30 to 100 μm, much more preferably 30 to 85 μm. The retardation film can be prepared by biaxial stretching, has birefringence in the film thickness direction and is suitably used particularly for optical compensation in a vertical alignment (VA) mode.

In general, forms for optical compensation in a vertical alignment mode for a large-sized liquid crystal display such as a television are a two-sheet form using an optical compensation film on both sides of a liquid crystal cell and a one-sheet form using an optical compensation film on only either side of a liquid crystal cell. When the retardation film of the present invention is used in the two-sheet form, the film preferably satisfies 30 nm < R (550) < 80 nm and 80 nm < K (550) < 150 nm and has a film thickness of 30 to 85 μm. Meanwhile, when the retardation film of the present invention is used in the one-sheet form, the film preferably satisfies 30 nm < R (550) < 80 nm and 150 nm < K (550) < 250 nm and has a film thickness of 30 to 85 μm. Since the retardation film of the present invention shows excellent developability of birefringence, it can also be suitably used as a retardation film of one-sheet form which requires a high K value. Liquid crystal display devices of vertical alignment mode that incorporate these retardation films show good contrast and color when viewed from an angle as well as from the front and have a wide view angle.

In view of all of the above elements, particularly preferred embodiments of the retardation film of the present invention are the following (i), (ii) and (iii).

(i) A retardation film comprising an amorphous polyolefin copolymer and having a film thickness of 20 to 80 μm,

(a) the amorphous polyolefin copolymer comprising an ethylene unit and a norbornene unit,
(b) the norbornene unit comprising two-chain parts, the tacticities of the two-chain parts being meso and racemo, and the meso two-chain parts/racemo two-chain parts ratio being 4 or more,
(c) the amorphous polyolefin copolymer having a glass transition temperature of 120 to 160°C, and
(d) a retardation R (550) in a film plane by light with a wavelength of 550 nm satisfying the following expression (1-1).

$$120 \text{ nm} < R\ (550) < 600 \text{ nm} \ldots (1\text{-}1)$$

(ii) A retardation film comprising an amorphous polyolefin copolymer and having a film thickness of 30 to 85 μm,

(a) the amorphous polyolefin copolymer comprising an ethylene unit and a norbornene unit,
(b) the norbornene unit comprising two-chain parts, the tacticities of the two-chain parts being meso and racemo, and the meso two-chain parts/racemo two-chain parts ratio being 4 or more,
(c) the amorphous polyolefin copolymer having a glass transition temperature of 120 to 160°C, and
(d) a retardation R (550) in a film plane by light with a wavelength of 550 nm satisfying the following expressions (2-1) and (3-1).

$$30 \text{ nm} < R\ (550) < 80 \text{ nm} \ldots (2\text{-}1)$$

$$80 \text{ nm} < K\ (550) < 150 \text{ nm} \ldots (3\text{-}1)$$

(iii) A retardation film comprising an amorphous polyolefin copolymer and having a film thickness of 30 to 85 μm,

(a) the amorphous polyolefin copolymer comprising an ethylene unit and a norbornene unit,
(b) the norbornene unit comprising two-chain parts, the tacticities of the two-chain parts being meso and racemo, and the meso two-chain parts/racemo two-chain parts ratio being 4 or more,
(c) the amorphous polyolefin copolymer having a glass transition temperature of 120 to 160°C, and
(d) a retardation R (550) in a film plane by light with a wavelength of 550 nm satisfying the following expressions (2-1) and (3-2).

$$30 \text{ nm} < R\ (550) < 80 \text{ nm} \ldots (2\text{-}1)$$

$$150 \text{ nm} < K\ (550) < 250 \text{ nm} \ldots (3\text{-}2)$$

Further, although a retardation film is generally used in such a manner that it is laminated between a liquid crystal cell and a polarizing film, it is generally used in two forms, i.e. an indirectly applied form in which the film adheres to a protective film using TAC (triacetyl cellulose) for an iodine-containing PVA (polyvinyl alcohol) film and a directly applied form in which the film is directly laminated on the PVA film without the protective film. The retardation film of the present invention may be used in either form.

Although the retardation film of the present invention can be produced in either continuous form or batch form as described above, continuous stretching is preferred form an industrial standpoint. When continuous stretching is carried out, the retardation film can be obtained in rolled-up form by rolling up the conveyed film to a core. In that case, a retardation film having a slow axis oriented in a film width direction or a retardation film having a slow axis oriented in a film traveling direction can be produced in the present invention. Preferable examples of the retardation film having a slow axis in the film width direction include a transversely monoaxially oriented film obtained by monoaxially stretching an unstretched film in a transverse direction by a tenter, and a biaxially oriented film obtained by stretching a longitudinally stretched film in a transverse direction to orient a slow axis in the transverse direction. Meanwhile, illustrative examples of the retardation film having a slow axis in the film traveling direction include a longitudinally monoaxially oriented film obtained by monoaxially stretching an unstretched film in a longitudinal direction, and a biaxially oriented film obtained by stretching a longitudinally stretched film in a transverse direction or stretching a transversely stretched film in a longitudinal direction to eventually orient a slow axis in the longitudinal direction. In the above vertical alignment mode of the large-sized liquid crystal displays, the retardation film is used in such a manner that the transmission axis of a polarizing plate and the slow axis of the retardation film are parallel to each other. Accordingly, in the case of biaxially oriented films, one having a slow axis in a film width direction is preferred from the viewpoint of productivity since it can be stuck to a polarizing plate roll in so-called "roll-to-roll" form.

Examples

Hereinafter, the present invention will be further described with reference to Examples. The present invention shall not be limited to only these Examples.

Raw materials used in Examples and Comparative Examples are as follows.

As toluene (solvent) and norbornene, those which were purified by distillation and fully dried were used.

As metallocenes, ethylene-bis(1-indenyl)zirconium dichloride purchased from Aldrich was used as it was. Isopropylidene-(9-fluorenyl)(cyclopentadienyl) zirconium dichloride was synthesized in accordance with a literature [J. A. Ewen et al, J. Am. Chem. Soc., 110, 6255 to 6266 (1988)].

As aluminoxane, polymethyl aluminoxane (PMAO) was purchased from TOSOH AKZO, and a 2M toluene solution thereof was prepared and used.

As triisobutyl aluminum [(iBu)3Al], a 1M n-hexane solution was purchased from KANTO CHEMICAL CO., INC. and used as it was.

Physical properties were measured in the following manners in Examples and Comparative Examples.

(1) Glass Transition Temperature (Tg): The glass transition temperature was measured by use of 2920 type DSC

of TA Instruments at a temperature increasing rate of 20°C/min.

(2) Molecular Weight of Copolymer: Reduced viscosity ηsp/c (dl/g) at 30°C in a cyclohexane solution with a concentration of 1.2 g/dl was measured.

(3) $^{13}C$-NMR Measurement of Copolymer: An NMR analyzer JNM-α400 of JEOL Ltd. was used. A copolymer was dissolved in a biortho-dichlorobenzene solvent and measured at 100°C. Tetramethylsilane was used as a base for a chemical shift. For quantitative determination, a 150-MHz $^{13}C$-NMR spectrum was measured in a reverse gated decoupling mode.

(4) Total Light Transmittance and Haze Value of Film: The total light transmittance and haze value of a film were measured by use of turbidity meter NDH-2000 of Nippon Denshoku Industries Co., Ltd.

(5) In-Plane Retardation Value R and Retardation Value K in Film Thickness Direction of Film : The in-plane retardation value R and retardation value K in a film thickness direction of a film were measured by use of spectroscopic ellipsometer M150 of JASCO Corporation at a light wavelength of 550 nm. The in-plane retardation value R was measured with incident light perpendicular to the film surface. The retardation value K in the film thickness direction was measured by changing the angle between incident light and the film surface gradually, measuring a retardation value at each angle, determining three-dimensional refractive indices nx, ny and nz by curve fitting with a known indicatrix formula, and substituting the indices into $K = \{(nx + ny)/2 - nz\} \times d$. The average refractive index of the film which was needed at that time was measured by use of Abbe refractometer ("Abbe refractometer 2-T" of ATAGO CO., LTD.)

(6) Thickness of Film: The thickness of film was measured by use of an electronic micro film thickness meter of Anritsu Corporation.

(7) Photoelastic Constant of Film: The photoelastic constant of film was measured by use of spectroscopic ellipsometer M150 of JASCO Corporation. It was calculated from a change in retardation value when stress was applied to the film at a measurement wavelength of 550 nm.

Example 1

A copolymerization reaction of ethylene and norbornene was carried out in the following manner by use of a 500-ml stainless steel autoclave having stirring blades as a polymerizer and ethylene-bis(1-indenyl)zirconium dichloride as a metallocene.

After the inside of the autoclave was substituted with nitrogen gas, 100 ml of toluene and 32 g of norbornene were charged into the vessel, and then 0.1 mmol of triisobutyl aluminum was added as a scavenger. Then, a metallocene-PMAO solution prepared by dissolving 30 mg of ethylene-bis (1-indenyl)zirconium dichloride in 35 ml of 2M PMAO toluene solution in a nitrogen atmosphere and agitating the solution at 25°C for 10 minutes to activate it was added. Then, after the temperature was raised to 40°C, 9.5 g of ethylene was added to the vessel under pressure to start polymerization. After passage of 2 hours from the start of the polymerization, the content of the vessel was put back into a nitrogen atmosphere, and a trace amount of isopropanol was added to terminate the reaction. The reaction mixture was poured into a large amount of methanol that had been made acidic by hydrochloric acid to produce a precipitation. The precipitation was separated by filtration, washed with acetone, methanol and water and dried to obtain 20.3 g of resin.

The molecular weight of the thus obtained ethylene-norbornene copolymer was 0.92 in terms of reduced viscosity ηsp/c. Its Tg was 120°C. A spectrum obtained by $^{13}C$-NMR measurement is shown in Fig. 1. It is seen from Fig. 1 that a racemo NN dyad at 29.7 ppm was hardly observed and virtually only a meso NN dyad at 28.3 ppm was observed. The fraction (mole fraction) of the NN dyads to all norbornene components was 0.21. The molar ratio (A)/(B) of the ethylene component to the norbornene component was 56/44. The resin was dissolved into cyclohexane to prepare a 20-wt% solution, and a film having a film thickness of 58 μm was obtained by solution casting. The total light transmittance and haze of the film were 91.1% and 1.1%, respectively.

Tg was as low as 107°C due to the influence of residual solvent. Further, when the photoelastic constant of the film was measured, it was $-6.3 \times 10^{-12}$ $Pa^{-1}$. The film was stretched by a batch-type biaxially stretching machine which locks the edges of the film by fasteners. The film was monoaxially stretched in a longitudinal direction under conditions presented in Table 1. A film thickness and a retardation R (550) in the central portion of the stretched film were measured. The results are shown in Table 1.

Example 2

TOPAS (trade name) of TICONA GmbH is a cycloolefin copolymer resulting from copolymerization of ethylene and norbornene in the presence of a metallocene catalyst. $^{13}C$-NMR measurement of its grade 6013 (Tg = 140°C) was conducted. Its spectrum is shown in Fig. 2. It is seen from Fig. 2 that meso dyad/racemo dyad is 0.36/0.04 = 9, and the fraction (mole fraction) of the NN dyads to all norbornene components was 0.40. Further, the molar ratio (A)/(B) of the ethylene component to the norbornene component was 50/50. The molecular weight was 0.80 dl/g in terms of reduced

viscosity ηsp/c. The pellets were melt-extruded from a T die having a width of 15 cm by use of a twin-screw melt extruder (TEX30SS-42BW-3V of The Japan Steel Works, Ltd.) and rolled up continuously by a cooling roller to produce a film. The film was produced at a cylinder temperature of 260°C, a T die temperature of 270°C, a cooling roller temperature of 145°C and a film production rate of 1 m/min. The film had excellent transparency and uniformity and good surface properties. The thickness of the film was 120 μm on average, except for portions having a width of 2.5 cm at both ends of the film. The Tg, total light transmittance and haze of the film were 138°C, 91.5% and 0.3%, respectively. Further, when the photoelastic constant of the film was measured, it was -6.1 x $10^{-12}$ $Pa^{-1}$. The film was monoaxially stretched in a longitudinal direction in the same manner as in Example 1. Stretch conditions and the results are shown in Table 1.

Examples 3 and 4

The unstretched film of Example 2 was monoaxially stretched in a longitudinal direction under other stretch conditions shown in Table 1. The results are shown in Table 1.

Example 5

In the film production by melt extrusion which was conducted in Example 2, a molten film having an average thickness of 190 μm was obtained by changing the slit width of the T die. The Tg, total light transmittance and haze of the obtained film were 138°C, 91.4% and 0.4%, respectively. This film was biaxially stretched to 1.5 times in a longitudinal direction and to 2.0 times in a transverse direction sequentially by the batch-type biaxially stretching machine used in Example 2. A film thickness, R (550) and K (550) in the central portion of the stretched film were measured. The results are shown in Table 1.

Example 6

Pellets were mixed together so that the weight ratio of the grade 6013 to grade 8007 (Tg = 80°C) of TOPAS (trade name) became 80/20 and kneaded by a twin-screw extruder to prepare a molten film of the blend. Film production was conducted in the same manner as in Example 2 except that the temperature of the cooling roller was lowered to 130°C. The film had a total light transmittance of 90.8%, a haze of 0.8% and high transparency and uniformity. The thickness of the film was 180 μm on average, except for portions having a width of 2.5 cm at both ends of the film. Further, when the photoelastic constant of this film was measured, it was -6.0 x $10^{-12}$ $Pa^{-1}$. In addition, the film showed a single Tg of 125°C, indicating that the both resins dissolved each other. When $^{13}C$ -NMR measurement of the film was carried out, the meso dyad/racemo dyad ratio was found to be 0.33/0.03 = 11, and the fraction (mole fraction) of the NN dyads to all norbornene components was 0.36. The molar ratio (A)/(B) of the ethylene component to the norbornene component was 53/47. The molecular weight was 0.88 dl/g in terms of reduced viscosity ηsp/c. The unstretched film was monoaxially stretched in a longitudinal direction under conditions shown in Table 1. The results are shown in Table 1. The transparency of the stretched film was good.

Comparative Example 1

Polymerization was carried out in the same manner as in Example 1 except that isopropylidene-(9-fluorenyl)(cyclopentadienyl)zirconium dichloride was used in place of the metallocene, thereby obtaining an ethylene-norbornene copolymer. The molecular weight of the obtained ethylene-norbornene copolymer was 0.77 in terms of reduced viscosity ηsp/c. Further, its Tg was 120°C. A spectrum obtained by $^{13}C$-NMR measurement is shown in Fig. 3. It is seen from Fig. 3 that the meso dyad/racemo dyad ratio is 0.02/0.32 = 0.625 and the fraction (mole fraction) of the NN dyads to all norbornene components was 0.34. Further, the molar ratio (A)/(B) of the ethylene component to the norbornene component was 55/45. The molecular weight was 0.88 dl/g in terms of reduced viscosity ηsp/c. The resin was dissolved into cyclohexane to prepare a 20-wt% solution, and a film having a thickness of 65 μm was obtained by solution casting. The total light transmittance and haze of the film were 91.6% and 0.5%, respectively. Tg was as low as 105°C due to the influence of residual solvent. Further, when the photoelastic constant of the film was measured, it was -9.2 x $10^{-12}$ $Pa^{-1}$. The unstretched film was monoaxially stretched in a longitudinal direction under conditions shown in Table 1. The results are shown in Table 1. The retardation value was very small.

Comparative Example 2

$^{13}C$-NMR measurement of the grade 5013 (Tg = 140°C) of TOPAS (trade name) was conducted. Its spectrum is shown in Fig. 4. It is seen from Fig. 4 that the meso dyad/racemo dyad ratio is 0.05/0.41 = 0.12, and the fraction (mole fraction) of the NN dyads to all norbornene components was 0.46. Further, the molar ratio (A)/(B) of the ethylene

component to the norbornene component was 50/50. The molecular weight was 0.66 dl/g in terms of reduced viscosity ηsp/c. The pellets were extruded under the same conditions as those used in Example 2 to obtain a molten film. The film had excellent transparency and uniformity and good surface properties. The thickness of the film was 82 μm on average, except for portions having a width of 2.5 cm at both ends of the film. The Tg, total light transmittance and haze of the film were 137°C, 90.7% and 0.5%, respectively. Further, when the photoelastic constant of the film was measured, it was $-9.3 \times 10^{-2}$ $Pa^{-1}$. The unstretched film was monoaxially stretched in a longitudinal direction in the same manner as in Example 1. Stretch conditions and the results are shown in Table 1. The retardation value was very small.

Table 1

| | Tg of Film °C | Stretch Conditions | | | | Film Thickness after Stretching μm | R(550) nm | K(550) nm |
|---|---|---|---|---|---|---|---|---|
| | | Temperature °C | Rate %/min | Ratio (Longitudinal) times | Ratio (Transverse) times | | | |
| Ex.1 | 107 | 117 | 50 | 2.0 | - | 33 | 137 | - |
| Ex.2 | 138 | 148 | 50 | 2.0 | - | 74 | 125 | - |
| Ex.3 | 138 | 143 | 100 | 2.5 | - | 60 | 310 | - |
| Ex.4 | 138 | 135 | 50 | 2.7 | - | 78 | 617 | - |
| Ex.5 | 138 | 143 | 50 | 1.5 | 2.0 | 52 | 62 | 139 |
| Ex.6 | 125 | 135 | 50 | 2.0 | - | 95 | 207 | - |
| C.Ex.1 | 105 | 115 | 50 | 2.0 | - | 43 | 6.4 | - |
| C.Ex.2 | 137 | 147 | 50 | 1.5 | - | 63 | 9.2 | - |

Ex.: Example
C.Ex.: Comparative Example

Example 7 (Longitudinally Monoaxially Oriented Rolled Film)

After pellets of the grade 6013 of TOPAS (trade name) were dried at 100°C for 4 hours, they were melt-extruded from a T die at a resin temperature of 270°C by use of the same twin-screw extruder as that used in Example 2 and rolled up continuously via a cooling drum at a film production rate of 3 m/min to obtain a roll of melt-extruded film having a width of 300 mm. The film had excellent transparency and good surface properties and uniformity. The thickness of the film was 103 μm on average. The total light transmittance and haze of the film were 91.8% and 0.4%, respectively. The unstretched film was passed through a longitudinally stretching machine which had a zone length of 7 m and stretched the film to 2.0 times in a longitudinal direction between nip rolls in a drying oven at a feed rate of 5 m/min and a temperature of 140°C, and the longitudinally monoaxially oriented film was rolled up. The properties of the film are shown in Table 2. The retardation film in the vicinity of λ/2 which had a slow axis in a film traveling direction was obtained.

Example 8 (Transversely Monoaxially Oriented Rolled Film)

The unstretched rolled film obtained in Example 7 was stretched in a transverse direction by use of a tenter transversely stretching machine having a preheating zone, a stretching zone and a fixing/cooling zone and having a total length of 15 m. The film was stretched to 2.7 times at a rate of 5 m/min and a temperature of 142°C, and the transversely monoaxially oriented film was rolled up. The properties of the film are shown in Table 2. The retardation film in the vicinity of λ/4 which had a slow axis in a film width direction was obtained.

Example 9 (Rolled Film for VA Mode Using Two Biaxially Oriented Films in a transverse direction after a longitudinal direction)

The procedure of Example 7 was repeated except that the film production rate in melt extrusion was changed to 2 m/min, to obtain a rolled film having a width of 300 mm and an average thickness of 153 μm. The film had excellent transparency and good surface properties and uniformity. The film was passed through the longitudinally stretching machine used in Example 7 to be stretched to 1.5 times in a longitudinal direction at a feed rate of 3.3 m/min. Then, the longitudinally stretched film was passed through the transversely stretching machine used in Example 8 to be stretched

to 2.0 times in a transverse direction at a rate of 5 m/min, so as to obtain a biaxially oriented film. Stretch conditions and film properties are shown in Table 2. The film suitable for a two-sheet large-size retardation film for a VA mode which has a slow axis in a film width direction was obtained.

Example 10 (Rolled Film for VA Mode Using One Biaxially Oriented Film in a transverse direction after a longitudinal direction)

The procedure of Example 7 was repeated except that the film production rate in melt extrusion was changed to 1.4 m/min, to obtain a rolled film having a width of 300 mm and an average thickness of 215 μm. The film had excellent transparency and good surface properties and uniformity. The film was passed through the longitudinally stretching machine used in Example 7 to be stretched to 2.0 times in a longitudinal direction at a feed rate of 2.5 m/min. Then, the longitudinally stretched film was passed through the transversely stretching machine used in Example 8 to be stretched to 2.5 times in a transverse direction at a rate of 5 m/min, so as to obtain a biaxially oriented film. Stretch conditions and film properties are shown in Table 2. The film suitable for a one-sheet large-size retardation film for a VA mode which has a slow axis in a film width direction was obtained.

Example 11 (a liquid crystal display for a VA mode)

The film prepared in Example 10 was stuck on a polyvinyl alcohol-based polarizing plate such that the slow axis of the film and the transmission axis of the polarizing plate were aligned. The retardation film side of the laminate was laminated on one side of TFT-type liquid crystal cell for a VA mode, and a polarizing plate was laminated on the other side of the liquid crystal cell in cross nicol to prepare a display device. As compared with display devices without the retardation film, the display device showed no coloration even when viewed from an oblique direction and had good contrast.

Table 2

| | Stretch Conditions | | | | Thickness | R(550) | K(550) | Slow Axis Angle [a] |
|---|---|---|---|---|---|---|---|---|
| | Longitudinal Stretching | | Transverse Stretching | | | | | |
| | Temperature °C | Ratio times | Temperature °C | Ratio times | μm | nm | nm | ° |
| Ex.7 | 140 | 2.0 | - | - | 68 | 277 | 190 | -1 |
| Ex.8 | - | - | 142 | 2.7 | 35 | 139 | 108 | 88 |
| Ex.9 | 140 | 1.5 | 145 | 2.0 | 63 | 53 | 117 | -89 |
| Ex.10 | 140 | 2.0 | 145 | 2.5 | 61 | 61 | 215 | 90 |

Ex.: Example
a: The traveling direction of film is 0°.

As described above, according to the present invention, a retardation film having small thickness can be obtained by use of the above copolymer having a small photoelastic constant and good developability of birefringence out of ethylene-cyclic olefin copolymers.

The retardation film has high moisture resistance and good dimensional stability and can be incorporated into, for example, a liquid crystal display device, for effective improvements in the visual quality of liquid crystals such as an improvement in view angle, an improvement in contrast and color compensation.

## Claims

**1.** A retardation film comprising an amorphous polyolefin copolymer,

(a) the amorphous polyolefin copolymer comprising an ethylene unit and a norbornene unit,
(b) the norbornene unit comprising two-chain parts, the tacticities of the two-chain parts being meso and racemo, and the meso two-chain parts/racemo two-chain parts ratio being 4 or more, and
(c) the amorphous polyolefin copolymer having a glass transition temperature of 100 to 180°C.

2. The retardation film of claim 1, wherein a retardation R (550) in a film plane by light with a wavelength of 550 nm satisfies the following expression (1) :

$$100 \text{ nm} < R\ (550) < 800 \text{ nm} \ldots (1)$$

and the thickness of the film is 10 to 150 μm.

3. The retardation film of claim 1, wherein a retardation R (550) in a film plane and a retardation K (550) in a film thickness direction by light with a wavelength of 550 nm satisfy the following expressions (2) and (3):

$$0 \text{ nm} < R\ (550) < 100 \text{ nm} \ldots (2)$$

$$50 \text{ nm} < K\ (550) < 400 \text{ nm} \ldots (3)$$

respectively, and the thickness of the film is 10 to 150 μm.

4. The retardation film of any of claims 1 to 3, which has a slow axis in a film width direction and is in rolled-up form.

5. The retardation film of any of claims 1 to 3, which has a slow axis in a film traveling direction and is in rolled-up form.

6. A retardation film comprising an amorphous polyolefin copolymer and having a film thickness of 20 to 80 μm,

(a) the amorphous polyolefin copolymer comprising an ethylene unit and a norbornene unit,
(b) the norbornene unit comprising two-chain parts, the tacticities of the two-chain parts being meso and racemo, and the meso two-chain parts/racemo two-chain parts ratio being 4 or more,
(c) the amorphous polyolefin copolymer having a glass transition temperature of 120 to 160°C, and
(d) a retardation R (550) in a film plane by light with a wavelength of 550 nm satisfying the following expression (1-1).

$$120 \text{ nm} < R\ (550) < 600 \text{ nm} \ldots (1\text{-}1)$$

7. A retardation film comprising an amorphous polyolefin copolymer and having a film thickness of 30 to 85 μm,

(a) the amorphous polyolefin copolymer comprising an ethylene unit and a norbornene unit,
(b) the norbornene unit comprising two-chain parts, the tacticities of the two-chain parts being meso and racemo, and the meso two-chain parts/racemo two-chain parts ratio being 4 ore more,
(c) the amorphous polyolefin copolymer having a glass transition temperature of 120 to 160°C, and
(d) a retardation R (550) in a film plane by light with a wavelength of 550 nm satisfying the following expressions (2-1) and (3-1).

$$30 \text{ nm} < R\ (550) < 80 \text{ nm} \ldots (2\text{-}1)$$

$$80 \text{ nm} < K\ (550) < 150 \text{ nm} \ldots (3\text{-}1)$$

8. A retardation film comprising an amorphous polyolefin copolymer and having a film thickness of 30 to 85 μm,

(a) the amorphous polyolefin copolymer comprising an ethylene unit and a norbornene unit,
(b) the norbornene unit comprising two-chain parts, the tacticities of the two-chain parts being meso and racemo,

and the meso two-chain parts/racemo two-chain parts ratio being 4 or more,
(c) the amorphous polyolefin copolymer having a glass transition temperature of 120 to 160°C, and
(d) a retardation R (550) in a film plane by light with a wavelength of 550 nm satisfying the following expressions (2-1) and (3-2).

$$30\ nm < R\ (550) < 80\ nm\ \ldots\ (2\text{-}1)$$

$$150\ nm < K\ (550) < 250\ nm\ \ldots\ (3\text{-}2)$$

**9.** An unoriented film for producing the retardation film of any of claims 1 to 8.

**10.** A liquid crystal display device comprising the retardation film of any of claims 1 to 8.

**11.** The liquid crystal display device of claim 10, which is in vertically oriented mode.

Fig. 1

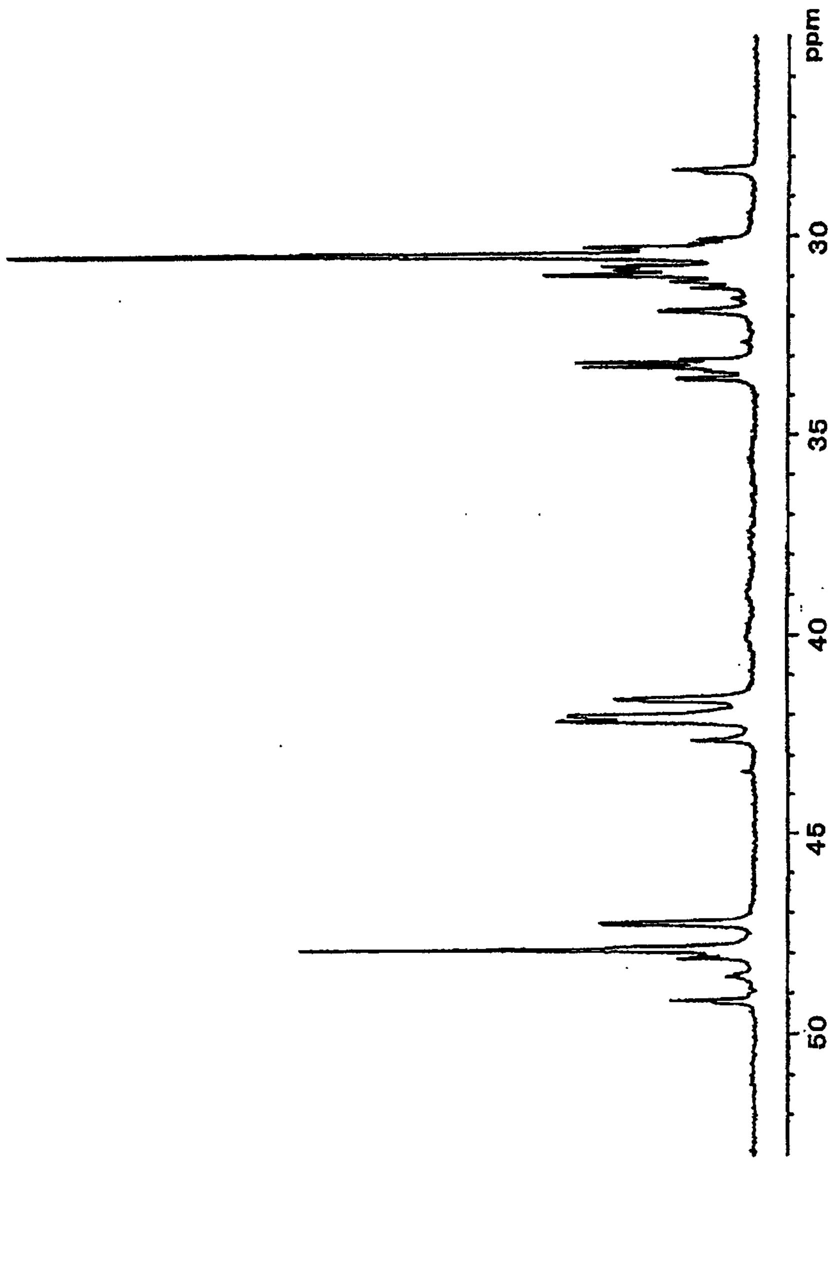

Fig. 2

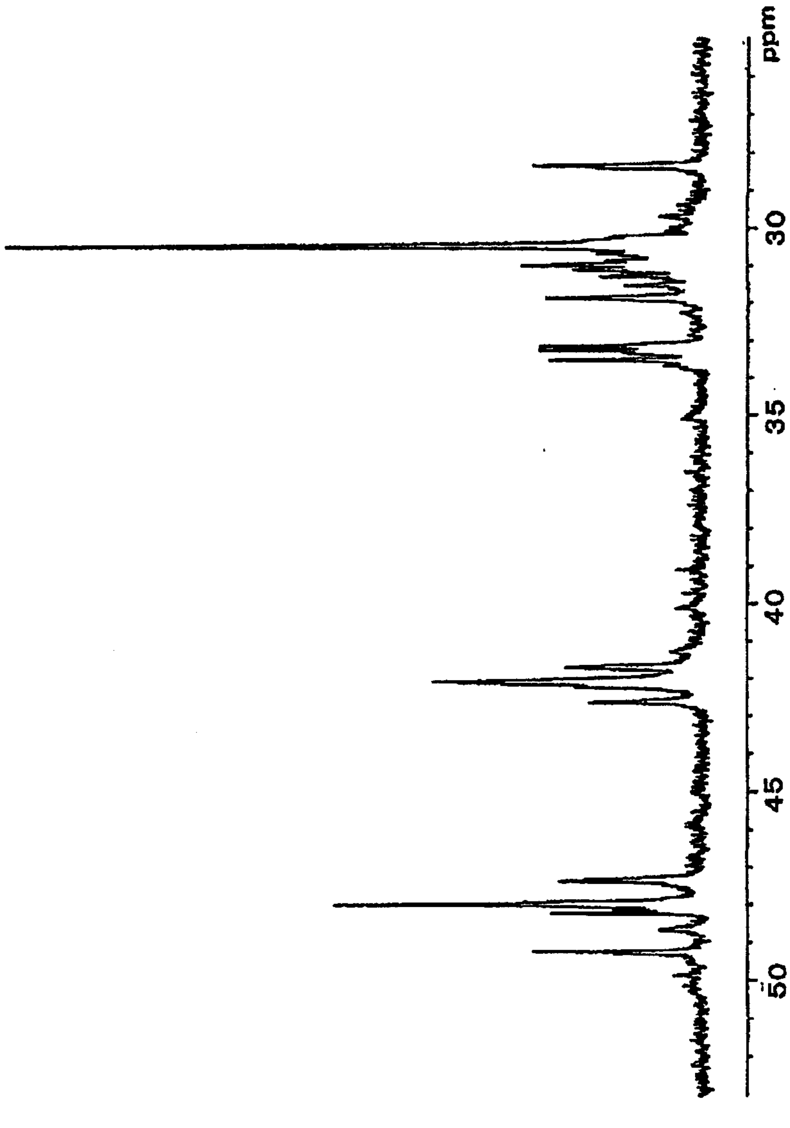

Fig. 3

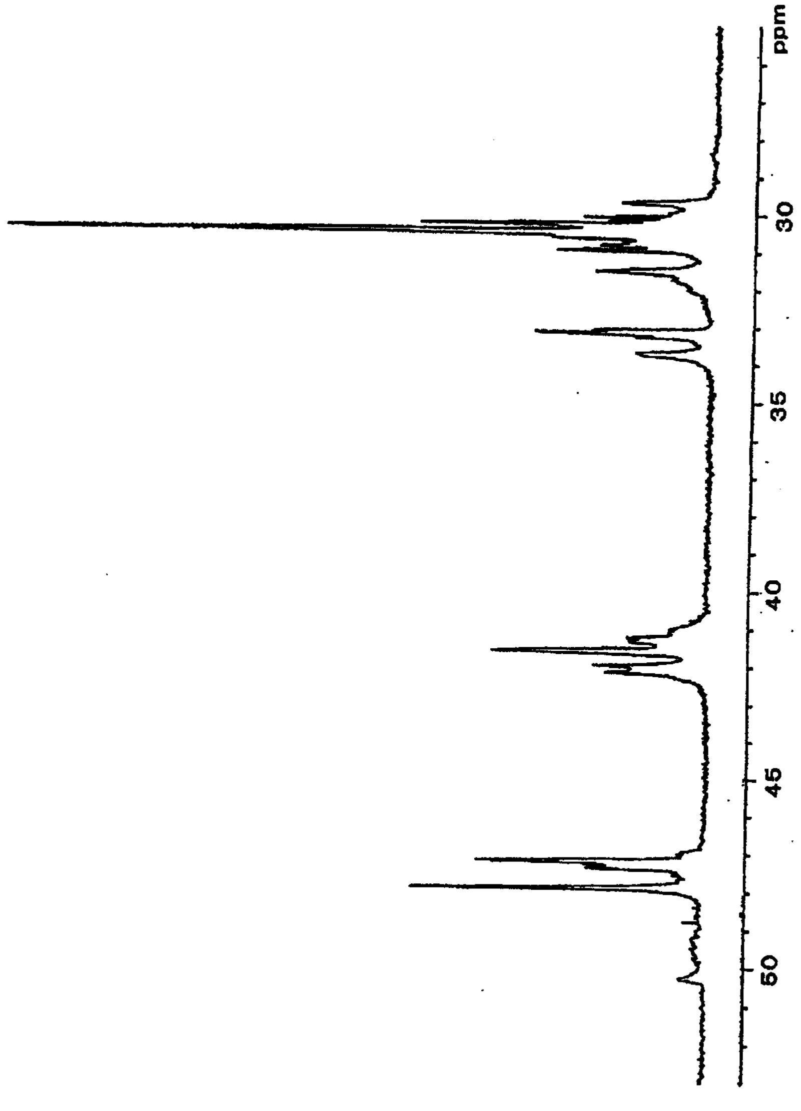

Fig. 4

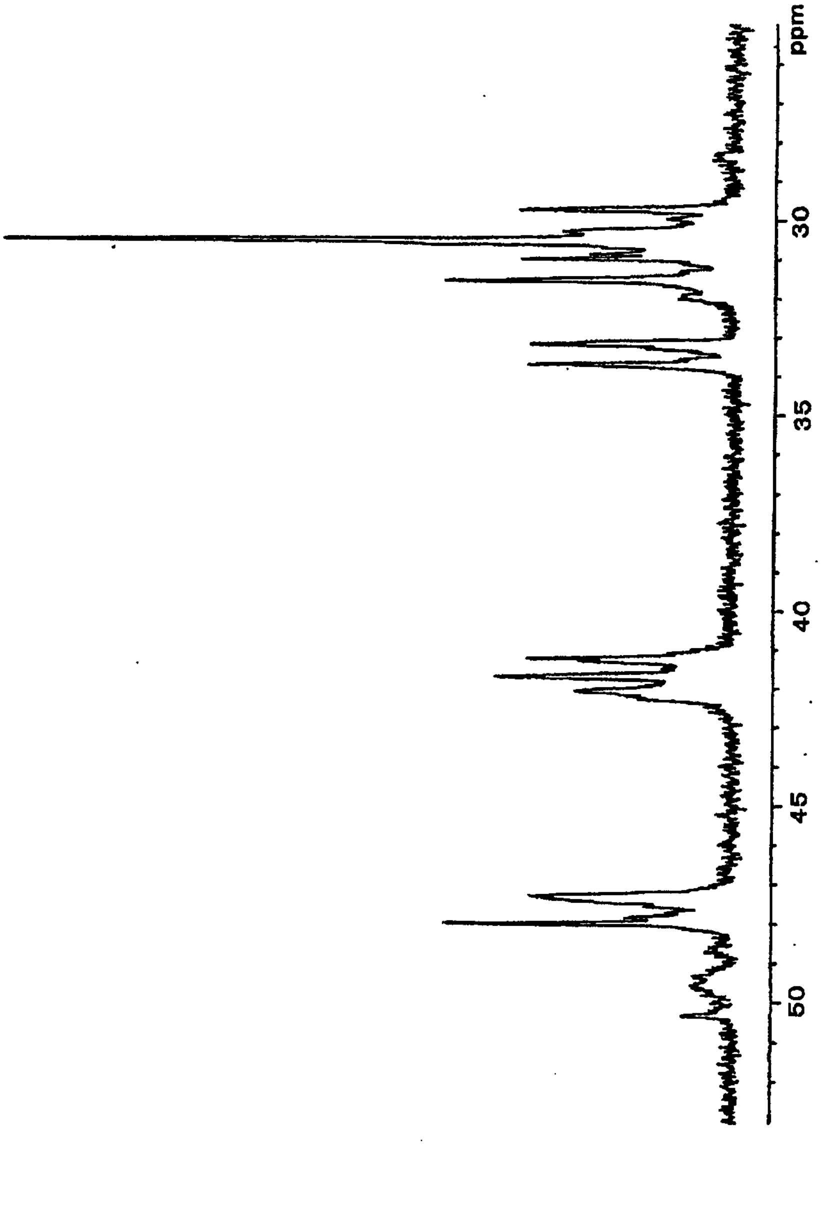

**INTERNATIONAL SEARCH REPORT**

International application No.
PCT/JP2005/016866

A. CLASSIFICATION OF SUBJECT MATTER
*G02B5/30* (2006.01), *G02F1/13363* (2006.01)

According to International Patent Classification (IPC) or to both national classification and IPC

B. FIELDS SEARCHED

Minimum documentation searched (classification system followed by classification symbols)
*G02B5/30* (2006.01), *G02F1/13363* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-194532 A (KANEKA Corp.), 19 July, 2001 (19.07.01), Par. Nos. [0019], [0055] (Family: none) | 1-11 |
| A | JP 2003-327618 A (Teijin Ltd.), 19 November, 2003 (19.11.03), Full text (Family: none) | 1-11 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 November, 2005 (04.11.05) | 15 November, 2005 (15.11.05) |
| Name and mailing address of the ISA/ Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4245202 A
- JP 3273046 B
- JP 6059121 A
- JP 8043812 A
- JP 3470567 B
- JP 2003306557 A
- JP 3497894 B
- JP 8507800 A
- JP 8507801 A
- JP 7002953 A


### Non-patent literature cited in the description


- *Macromol. Rapid Commun.,* 1999, vol. 20, 279
- **J. A. EWEN et al.** *J. Am. Chem. Soc.,* 1988, vol. 110, 6255-6266